# EUROPEAN PATENT APPLICATION

(11) **EP 4 651 514 A1**
(43) Date of publication of application: **19.11.2025**
(21) Application number: 25172250.0
(22) Date of filing: 24.04.2025
(51) Int. Cl.: H04R 1/10, H02J 7/00

(54) **STATE DETECTION AND SHIP MODE MECHANISM FOR BATTERY POWERED ACCESSORY WITH A CHARGE-THROUGH CARRYING CASE**

(30) Priority: 26.04.2024 US 202463639462 P; 30.08.2024 US 202418821797
(71) Applicant: Apple Inc., Cupertino, CA 95014 (US)
(72) Inventor: SCHMANSKI, Robert F., Cupertino, 95014 (US); DEUTSCHE, Jonathan H., Cupertino, 95014 (US)
(74) Representative: Zacco Denmark A/S

(57) **Abstract**

A portable electronic system comprising: a case for storing a battery powered accessory, the case comprising a body defining a receiving area in which the battery powered accessory can be stored, a lid coupled to the body and operable between a closed position in which the lid covers the socket and an open position in which the socket is exposed, and a power receiving component operable to be coupled to an external power source to receive power; a battery powered accessory comprising a housing, a rechargeable battery disposed within the housing, and control circuitry disposed within the housing and coupled to the rechargeable battery; and a common bus operable to, when the battery powered accessory is stored within the receiving area of the case, transfer power and enable communication between the case and the battery powered accessory; wherein the control circuitry within the battery powered accessory is configured to determine a state of the portable electronic system by monitoring voltage on the common bus.

## Description

### CROSS-REFERENCES TO OTHER APPLICATIONS

This application claims priority to U.S. Provisional Application No. 63/639,462, for "STATE DETECTION AND SHIP MODE MECHANISM FOR BATTERY POWERED ACCESSORY WITH A CHARGE-THROUGH CARRYING CASE" filed on April 26, 2024, and U.S. Non-Provisional Patent Application No. 18/821,797, for "STATE DETECTION AND SHIP MODE MECHANISM FOR BATTERY POWERED ACCESSORY WITH A CHARGE-THROUGH CARRYING CASE" filed on August 30, 2024, which are hereby incorporated by reference herein in their entireties for all purposes.

### BACKGROUND

Portable earphone devices, such as headphones, can be used with a wide variety of electronic devices such as portable media players, smart phones, tablet computers, laptop computers, stereo systems, and other types of devices. Portable earphone devices have historically included one or more small speakers configured to be placed on, in, or near a user's ear, structural components that hold the speakers in place, and a cable that electrically connects the portable earphone device to an audio source.

A growing trend has been the increased popularity of small, wireless headphones that fit within the ear of a user, referred to herein as "wireless earphones". Wireless earphones do not include a cable between the audio source and earphones and instead, wirelessly receive a stream of audio data from a wireless audio source.

Without a cable to deliver power to the earphones, wireless earphones require a battery to operate the circuitry, including speakers, control circuitry, and wireless circuitry, within the earphones. Additionally, wireless earphones can be relatively small. While their size is an advantage in terms of portability and ease of use, their small size makes them easy to misplace or lose.

To address these issues, many wireless earphones come with a case that both stores the earphones in a convenient location and can be used to charge the battery in the earphones. Some such cases include a battery and internal processor (e.g., a microcontroller or "MCU") that enable the wireless earbuds to be charged when stored in the charging case even in the absence of a connection to an external power source. The internal processor, which manages the battery, also enables different states to be detected and conveyed between the charging case and the wireless earphones to provide an improved user experience.

Some states (or scenarios) that might be detected and conveyed between the charging case and the wireless earphones include: whether an earphone is in or out of the case, whether an external power source is connected to the charging case to allow the earphones to charge their batteries, and whether the case has its lid opened or closed. Once state information is conveyed to a wireless earphone, the earphone can then make "decisions" based on the state detected. For example, if the earphone is in case and detects a lid open, the earphone can enable its Bluetooth to establish a wireless connection with a previously paired smart phone or similar host device. As another example, when the lid of a charging case is closed and the earphones are in the case, the wireless earbuds turn off wireless circuitry within each wireless earphone to conserve battery power.

While such charging cases, and the features they provide, can be very useful, including a battery and processing circuitry within the charging case both adds to the overall size of the case and adds to the overall expense of the wireless earphones.

### SUMMARY

Embodiments described herein pertain to cases for wireless earphones or other battery powered electronic devices. In the embodiments described, the case contains neither an internal battery nor a microcontroller (MCU). Thus, wireless earphones that are stored in the case can only be charged when the case itself is connected to a power source. Not including a battery or MCU in the case allows the case to be smaller and manufactured more inexpensively than many traditional charging cases that include a battery. Wireless earphones are typically sold with a storage case. Thus, reducing the manufacturing cost of the storage case can, in turn, reduce the cost to consumers of the wireless earphones.

Despite not including an internal battery or an MCU, however, the disclosed embodiments enable a case for wireless earphones to convey state detection information to the wireless earphones thus enabling rich interactions between the case and the earphones. While some embodiments are particularly applicable to a case for wireless earphones, it is to be understood that embodiments are not limited to such. In other embodiments, cases disclosed herein can be used to store other types of portable battery powered devices, such as over-ear and on-ear headphones, hearing aids, smart watches and smart rings, among others.

In some embodiments, a portable electronic system is provided. The system can include: a case and a battery powered accessory. The case can include a body defining a receiving area in which the battery powered accessory can be stored, a lid coupled to the body and operable between a closed position in which the lid covers the receiving area and an open position in which the receiving area is exposed, and a power receiving component operable to be coupled to an external power source to receive power. The battery powered accessory can include a housing, a rechargeable battery disposed within the housing, and control circuitry disposed within the housing and coupled to the rechargeable battery. The portable electronic system can further include a common bus operable to, when the battery powered accessory is stored within the receiving area of the case, transfer power and enable communication between the case and the battery powered accessory, and the control circuitry within the battery powered accessory can be configured to determine a state of the portable electronic system by monitoring voltage on the common bus.

In various implementations, embodiments can include one or more of the following features. The state of the portable electronic system determined by the control circuitry in the battery powered accessory can be whether the lid of the case is opened or closed. When the power receiving component of the case is connected to an external power supply, the control circuitry can determine whether the lid is opened or closed based on a voltage level on the common bus. When the power receiving component of the case is not connected to an external power supply, the control circuitry can determine whether the lid is opened or closed by detecting a presence or absence of a pull-down resistor on the common bus. The case for storing a battery powered accessory can include a first bus interface, and the battery powered accessory can include a second bus interface, where when the battery powered accessory is properly stored within the receiving area of the case, the first bus interface is coupled to the second bus interface. Each of the first and second bus interfaces can include a set of two electrical contacts. The case does not include a rechargeable battery or any other power source. The power receiving component can include a receptacle connector. The case includes first and second receiving areas, and the portable electronic system comprises first and second battery powered accessories, where the first battery powered accessory is sized and shaped to fit within the first receiving area and the second battery powered accessory is sized and shaped to fit with in the second receiving area. The first battery powered accessory can be a first wireless earphone and the second battery powered accessory can be a second wireless earphone.

Additionally, in various implementations, embodiments can include one or more of the following features. The case can further include a switch operably coupled to the lid and configured to alter a voltage on the common bus to a first voltage when the lid is in the open position and to a second voltage when the lid is in the closed position. The control circuitry in the battery powered accessory can be configured to determine whether the case lid is open or closed based on the voltage on the common bus. The case can further include a voltage regulator. When the power receiving component in the case is coupled to and receiving power from an external power source: the voltage regulator can be configured to supply a charging voltage to the common bus between a minimum acceptable voltage level and a maximum acceptable voltage level, the control circuitry in the battery powered accessory can be configured to charge the rechargeable battery from the charging voltage. The first voltage can be within a first charging voltage range that is entirely within the range of the minimum acceptable voltage level and a maximum acceptable voltage level. The second voltage can be within a second charging voltage that is entirely within the range of the minimum acceptable voltage level and a maximum acceptable voltage level. The first voltage charging range and second voltage charging range can be set so that the ranges do not overlap. The battery powered accessory can further include a constant current source operably coupled to the control circuitry in the battery powered accessory. When the power receiving component is not receiving power from an external power source, the control circuitry can: (i) activate the constant current source to apply a known pull-up voltage on the common bus, (ii) then take a voltage reading of the voltage on the common bus, and (iii) determine that the lid is opened or closed based on whether the voltage reading is approximately equal to the pull-up voltage or less than the pull-up voltage.

In some embodiments, a portable wireless listening device system is provided where the portable wireless listening device system includes: a pair of wireless earphones including a first wireless earphone and a second wireless earphone, each of the first and second wireless earphones comprising: an earphone housing, an acoustic port formed through the earphone housing, a speaker disposed within the earphone housing and aligned to emit sound through the acoustic port, a rechargeable battery disposed within the earphone housing, and control circuitry disposed within the earphone housing; a case for storing the pair of wireless earphones, the case comprising: a body defining first and second sockets, the first socket sized and shaped to receive the first wireless earphone and the second socket sized and shaped to receive the second wireless earphone; a lid coupled to the body and operable between a closed position in which the lid covers the first and second sockets and an open position in which the first and second sockets are exposed; and a power receiving component configured to be coupled to an external power source to receive power; and a common bus operable to, when the wireless earphones are stored within the case, transfer power and enable communication between the case and the wireless earphones. Additionally, the control circuitry within each wireless earphone can be configured to determine a state of portable wireless listening system by monitoring voltage levels on the common bus.

In various implementations, embodiments of a portable wireless listening device system can include one or more of the following features. The system can include only two rechargeable batteries with the rechargeable battery in the first wireless earphone being a first of the two rechargeable batteries and the rechargeable battery in the second wireless earphone being a second of the two rechargeable batteries. The state of the portable wireless listening system can be determined by the control circuitry in the wireless earphone is whether the lid of the case is opened or closed. The state of the portable wireless listening system determined by the control circuitry in the wireless earphone can be whether the first or second wireless earphone stored within the case. The case can include a switch operably coupled to the lid and configured to alter a voltage on the common bus to a first voltage when the lid is in the open position and to a second voltage when the lid is in the closed position, and the control circuitry in each wireless earphone can be configured to determine whether the case lid is open or closed based on the voltage on the common bus. The case can further include a voltage regulator and wherein, when the power receiving component in the case is coupled to and receiving power from an external power source: (i) the voltage regulator is configured to supply a charging voltage to the common bus between a minimum acceptable voltage level and a maximum acceptable voltage level; (ii) the control circuitry in each wireless earphone is configured to charge its respective wireless earphone from the charging voltage; and (iii) the first voltage is within a first charging voltage range that is entirely within the range of the minimum acceptable voltage level and a maximum acceptable voltage level, the second voltage is within a second charging voltage that is entirely within the range of the minimum acceptable voltage level and a maximum acceptable voltage level, and the first voltage charging range and second voltage charging range do not overlap. The case for storing the pair of wireless earphones can further include a first bus interface to the common bus, the first bus interface comprising first set of two electrical contacts in the first socket and a second set of electrical contacts in the second socket. The pair of wireless earphones can include a second bus interface to the common bus, the second bus interface comprising a third set of electrical contacts aligned to mate with the first set of electrical contacts when the first wireless earphone is received in the first socket, and a fourth set of electrical contacts aligned to mate with the second set of electrical contacts when the second wireless earphone is received in the second socket. When the pair of wireless earphones is stored within the case, the first bus interface is coupled to the second bus interface. The power receiving component can be a receptacle connector. Each wireless earphone can further include a constant current source operably coupled to the control circuitry in its respective wireless earphone, and when the power receiving component is not receiving power from an external power source, the control circuitry: (i) activates the constant current source to apply a known pull-up voltage on the common bus, (ii) then takes a voltage reading of the voltage on the common bus, and (iii) determines that the lid is opened or closed based on whether the voltage reading is approximately equal to the pull-up voltage or less than the pull-up voltage.

To better understand the nature and advantages of the present invention, reference should be made to the following description and the accompanying figures. It is to be understood, however, that each of the figures is provided for the purpose of illustration only and is not intended as a definition of the limits of the scope of the present invention. Also, as a general rule, and unless it is evident to the contrary from the description, where elements in different figures use identical reference numbers, the elements are generally either identical or at least similar in function or purpose.

### BRIEF DESCRIPTION OF THE DRAWINGS

FIG. 1 is a simplified illustration of an exemplary portable electronic listening device system having a host device configured as a smart phone, a case, and a pair of wireless earphones according to some embodiments;
FIG. 2 is a simplified block diagram of various components of a portable wireless listening system according to some embodiments;
FIG. 3 is a simplified schematic diagram of a portable wireless listening system according to some embodiments; and
FIGS. 4A and 4B are a simplified state diagram for the portable wireless listening system depicted in FIG. 3 according to some embodiments.

### DETAILED DESCRIPTION

Some embodiments described herein pertain to cases for wireless earphones or other battery powered electronic devices. In the embodiments described, the case contains neither an internal battery nor a microcontroller (MCU). Thus, wireless earphones that are stored in the case can only be charged when the case itself is connected to a power source. Not including a battery or MCU in the case allows the case to be smaller and manufactured more inexpensively than many traditional charging cases that include a battery. Despite the lack of a battery and microcontroller in cases disclosed herein, embodiments are able to identify and determine state information that enables wireless earphones stored in the case to take certain actions to preserve battery life and/or otherwise provide the same rich user experience that traditional charging cases that include both a battery and microcontroller provide. In performing such, embodiments disclosed herein use new, alternative mechanisms and techniques to convey state in the place of serial communication between a case and earphones. Additionally, in embodiments disclosed herein, the earphones themselves are responsible for detecting the presence of the case. For example, in the absence of some other indication of case such as a DC voltage, each earphone can run a capacitance check to detect the presence of the carrying case where the earphone considers itself "stored" or "docked" if it detects a known DC voltage or case capacitance and considers itself "unstored" or "undocked" if it does not detect case capacitance.

Further details on embodiments are set forth in the description below, but first several definitions of terms used herein are provided.

### Definitions

As used herein, the term "earphones" includes both small headphones, sometimes referred to as "earbuds", that fit within a user's outer ear facing the ear canal without being inserted into the ear canal, and in-ear headphones, sometimes referred to as canal phones, that are inserted in the ear canal itself. The term "earbuds", however, is not used consistently within the industry, and is often used to represent any type of headphone that fits within a user's ear. Thus, as used herein, the terms "earbuds" and "earphones" are used interchangeably and can refer to both earphones that are inserted into the ear canal as well as earphones that face the ear canal without being inserted therein.

"Wireless earphones" are earphones that are able to receive and/or send streams of audio data from or to a second device without a wire connecting the earphones to the second device using, for example, a wireless communication protocol. Most commercially available wireless earphones include both a left earbud and a right earbud that have no physical connection to each other. Thus, each of the left and right earbuds includes its own wireless communications circuitry and such wireless earphones are sometimes referred to as "true wireless earphones". Some other wireless earphones include a cable that connects the left ear and right ear portions of the earphones and thus only require wireless circuitry in one of the two earphone portions. Embodiments disclosed herein can be useful for storing both types of wireless earphones.

As used herein, a case for wireless earphones (or other battery powered accessory devices) that does not include an internal battery is referred to as "charge-through carrying case". Without an internal battery to provide persistent power, a charge-through carrying case also does not include a microcontroller that requires such persistent power. In contrast, a case that includes an internal battery for charging wireless earphones stored therein is referred to as a "charging case". In many instances, a charging case will also include a microcontroller or similar circuitry to control operations performed by the charging case but charging cases without microcontrollers are possible.

### Example Wireless Listening System

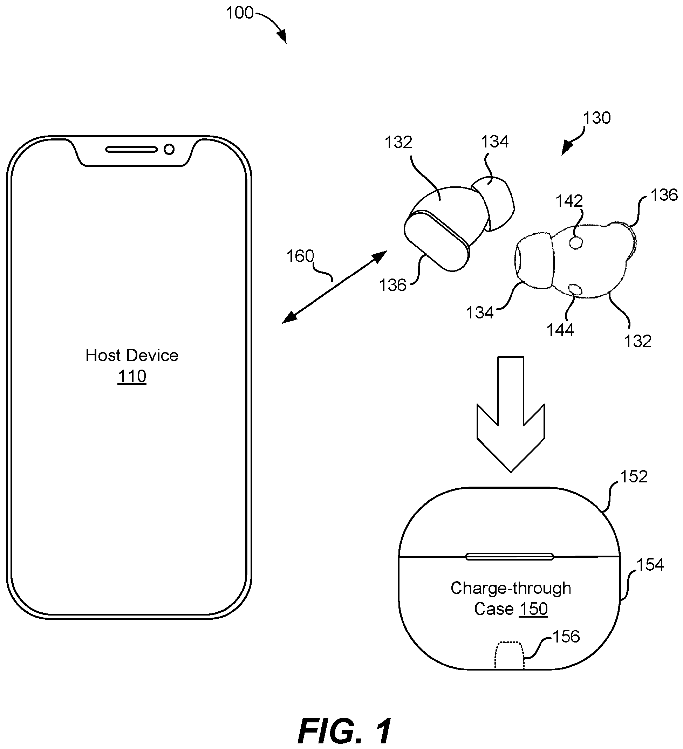

FIG. 1 is an example of a wireless listening system 100 according to some embodiments. System 100 can include a host device 110, a pair of wireless earphones 130 (i.e., left and right earphones) and a charge-through carrying case 150. Host device 110 is depicted in FIG. 1 as a smart phone but can be any electronic device that can transmit audio data to wireless earphones 130. Other, non-limiting examples of suitable host devices 110 include a laptop computer, a desktop computer, a tablet computer, a smart watch, an audio system, a video player, and the like.

As depicted graphically in FIG. 1, host device 110 can be wirelessly communicatively coupled with wireless earphones 130 through wireless communication link 160, which can be a known and established wireless communication protocol, such as a Bluetooth protocol, a Wi-Fi protocol, or any other acceptable protocol that enables electronic devices to wirelessly communicate with each other. Thus, host device 110 can exchange data directly with wireless earphones 130, such as audio data, that can be transmitted over wireless link 160 to wireless listening devices 130 for play back to a user, and audio data that can be received by host device 110 as recorded/inputted from microphones in the wireless earphones 130.

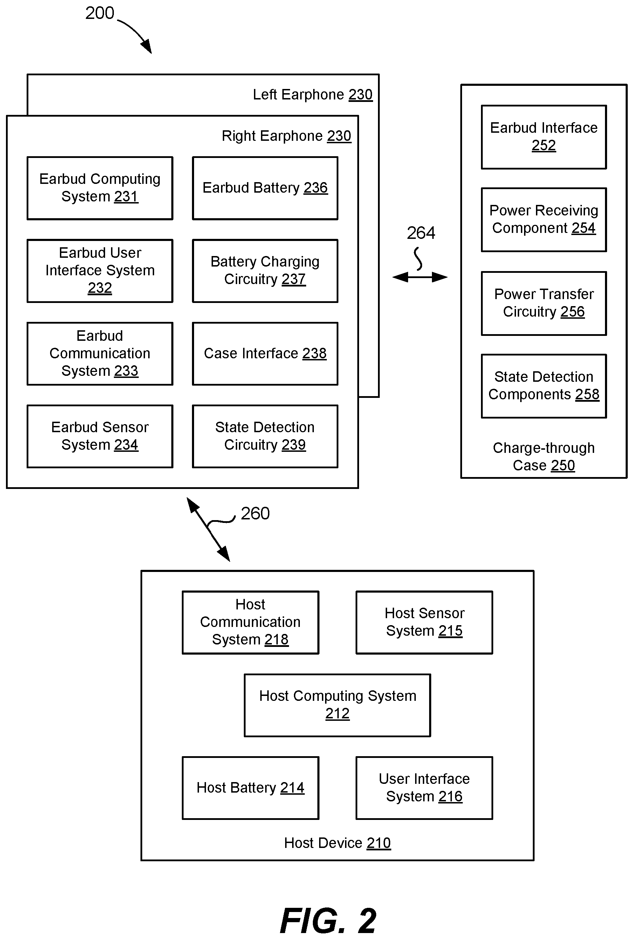

According to some embodiments, each individual wireless earphone 130 can include a housing 132 having an ear tip 134 at one end of the housing and a multifunction button 136 positioned at an opposite end of the housing. Housing 132 can be formed of a monolithic outer structure and can include a nozzle (not visible in FIG. 1) to which ear tip 134 can be removably attached. In some embodiments, housing 132 can define an acoustic port through the nozzle that can direct sound from an internal audio driver out of housing 132, through ear tip 134 and into a user's ear canal. Ear tip 134 can be a deformable ear tip that can be inserted into a user's ear canal creating a seal within the user's ear canal and benefitting the comfort, frequency response, and noise canceling features of the wireless product. Disposed within housing 132 can be a speaker, circuitry, a rechargeable battery and other components as discussed with respect to FIG. 2.

As will be appreciated herein, wireless earphones 130 can be sufficiently small and light that the devices can be comfortably worn by a user for extended periods of time and even all day. The wireless listening devices 130 can provide an audio interface to host device 110 so that the user may not need to utilize a graphical interface of host device 110. In other words, wireless listening devices 130 can be sufficiently sophisticated that they can enable the user to perform certain day-to-day operations from host device 110 solely through interactions with wireless listening devices 130. This can create further independence from host device 110 by not requiring the user to physically interact with, and/or look at the display screen of, host device 110, especially when the functionality of wireless listening devices 130 is combined with the voice control capabilities of host device 110. Thus, wireless listening devices 130 can enable a true hands-free experience for the user.

In some embodiments, user input to wireless listening devices 130, and thus to host device 110, can be realized through one or more microphones (not shown in FIG. 1) and/or a multifunction button 136. The multifunction button 136 can be, for example, a rocker switch that allows a user to input different commands based on the location that the user touches rocker button and the duration for which the multifunction button is depressed.

Housing 132 can also include electrical contacts 142, 144 disposed along an exterior surface of the housing for making contact with corresponding electrical contacts (not shown in FIG. 1) in charge-through carrying case 150. In some embodiments contacts 142, 144 can be flush with an exterior surface of housing 132 and tightly sealed with the housing to prevent moisture or particles from entering the housing through the openings for the contacts.

Wireless earphones 130 can be stored within charge-through carrying case 150, which can protect the devices 130 from being lost and/or damaged when they are not in use. Towards this end, the charge-through carrying case can include a lid 152 that is connected by a hinge (not shown) to a body 154 along with two separate sockets or receiving areas that are sized and shaped to accommodate the earphones 130. The sockets can be formed within body 154 and, while not visible in FIG. 1, a first socket can accommodate a first one of earphones 130 while a second socket can accommodate a second one of earphones 130. Lid 152 can then be opened and closed to enable wireless earphones 130 to be placed within their respective sockets and/or removed from the charge-through carrying case as appropriate.

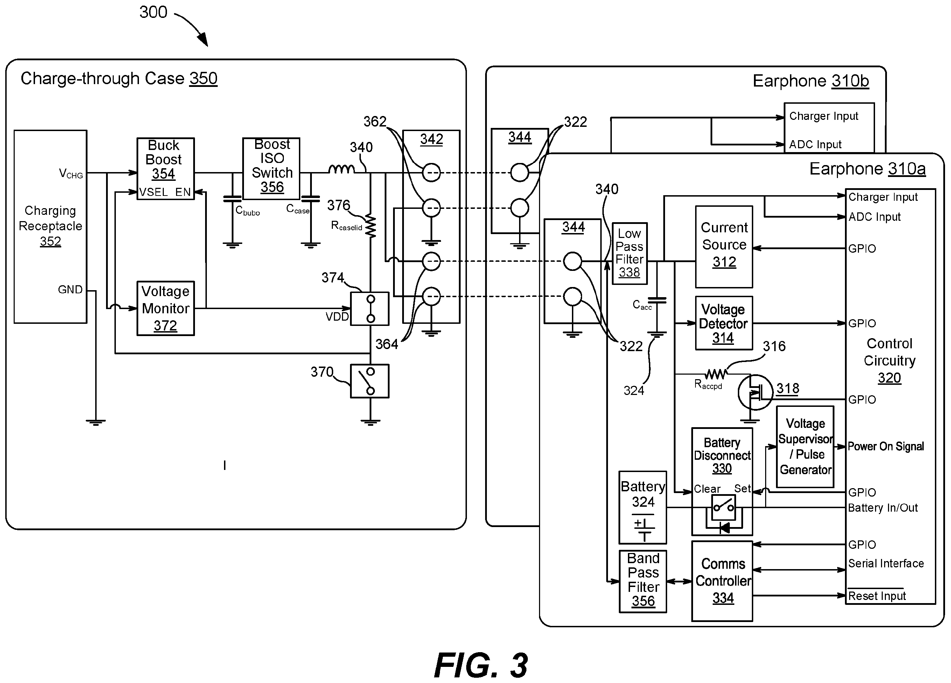

Charge-through carrying case 150 can also include a pair of contacts within each of the separate sockets and a receptacle connector 156, such as a USB-C or Lightning Connector. When wireless earphones 130 are stored in charge-through carrying case 150, the first pair of contacts is positioned to electrically couple to corresponding contacts 142, 144 from the left earphone 130 while the second pair of contacts is positioned to electrically couple to corresponding contacts 142, 144 from the right earphone 130. Then, when an appropriate charging cable is connected to a power source is mated with receptacle connector 156, case 150 allows charging current to pass through the charge-through carrying case to wireless earphones 150 to charge batteries within each earphone. Further details on such a charging operation are discussed below with respect to FIG. 3.

Notably, and different from many commercially available charging cases that store wireless earphones, charge-through carrying case 150 does not include a battery. Thus, charge-through carrying case 150 does not have a persistent power supply and can only charge earphones 130 when the case is connected to a power source via receptacle connector 156. Charge-through carrying case 150 also does not include a microcontroller or similar processing unit that would require a persistent power to properly function. The lack of a battery and microcontroller enable charge-through carrying case 150 to be smaller and more compact than cases designed to store earphones 130 that have such features. The lack of a battery and microcontroller also enable charge-through carrying case 150 to be manufactured at a reduced cost point, which in turn, enables a set of wireless earphones 130 and charge-through carrying case 150 to be sold at a lower price point than if case 150 included a battery and/or microcontroller.

FIG. 2 is a simplified block diagram of various components of a wireless listening system 200 according to some embodiments. As shown in FIG. 2, wireless listening system 200 includes a host device 210, a pair of wireless earphones (earbuds) 230 (e.g., a right earbud 230 and a left earbud 230) and a charge-through carrying case 250. System 200 can be representative of system 100 shown in FIG. 1 with host device 210, wireless earphones 230 and charge-through carrying case 250 being representative of host device 110, wireless earphones 130 and charge-through carrying case 150, respectively. Each wireless earphone 230 can receive and generate sound to provide an enhanced user interface for host device 210. For convenience, the discussion below refers to a single wireless earphone 230, but it is to be understood that, in some embodiments, a pair of wireless earphones can cooperate together for use in a user's left and right ears, respectively, and each wireless earphone (i.e., left and right earbuds) in the pair can include the same or similar components.

Host device 210, to which wireless earphone 230 is an accessory, can be a portable electronic device, such as a smart phone, tablet, or laptop computer. Host device 210 can include a host computing system 212 coupled to a battery 214 and a host memory bank (not shown) containing lines of code executable by host computing system 212 for operating host device 210. Host device 210 can also include a host sensor system 215 and a user interface 216. Sensor system 215 can include, for example, one or more of an accelerometer, a gyroscope, a light sensor, and the like, for allowing host device 210 to sense the environment, while host user interface system 216 can include, for example, one or more of a display, a speaker, buttons, a touch screen, and the like, for outputting information to and receiving input from a user.

Additionally, host device 210 can also include a host communication system 218 for allowing host device 210 to send and/or receive data from the Internet or cell towers via wireless communication, e.g., wireless fidelity (Wi-Fi), long term evolution (LTE), code division multiple access (CDMA), global system for mobiles (GSM), Bluetooth, and the like. In some embodiments, host communication system 218 can also communicate with communication system 233 in wireless earphone 230 via a wireless communication link 260 so that host device 210 can send audio data to wireless earphone 230 to output sound and receive data from wireless earphone 230 to receive user inputs. The communication link 260 can be any suitable wireless communication line such as Bluetooth connection. By enabling communication between host device 210 and wireless earphone 230, wireless listening device 230 can enhance the user interface of host device 210.

Wireless earphone 230 can include a processing system 231 that executes computer-readable instructions stored in a memory bank (not shown) for performing a plurality of functions for wireless earphone 230. Processing system 231 can be one or more suitable computing devices, such as microcontrollers, microprocessors, computer processing units (CPUs), digital signal processing units (DSPs), field programmable gate arrays (FPGAs), application specific integrated circuits (ASICs) and the like. Some of the functions performed by processing system 231 can rely on state detection circuitry 239 as discussed in detail in conjunction with the circuitry set forth in FIG. 3.

Processing system 231 can be operatively coupled to a user interface system 232, communication system 233, and a sensor system 234 for enabling wireless earphone 230 to perform one or more functions. For instance, user interface system 232 can include a driver (e.g., speaker) for outputting sound to a user, one or more microphones for inputting sound from the environment or the user, one or more LEDs for providing visual notifications to a user, a pressure sensor or a touch sensor (e.g., a resistive or capacitive touch sensor) for receiving user input, and/or any other suitable input or output device. In some embodiments, user interface 232 can include a multifunction button, such as multifunction button 136.

Communication system 233 can include wireless and wired communication components for enabling wireless earphone 230 to send and receive data/commands from host device 210. For example, in some embodiments communication system 233 can include one or more wireless antennas and circuitry that enables wireless earphone 230 to communicate with host device 210 over wireless link 260 via a Bluetooth or other wireless communication protocol. Sensor system 234 can include optical sensors, accelerometers, microphones, and any other type of sensor that can measure a parameter of an external entity and/or environment.

Wireless earphone 230 can also include a rechargeable battery 236, which can be any suitable energy storage device, such as a lithium-ion battery, capable of storing energy and discharging stored energy to operate wireless earphone 230. The discharged energy can be used to power the electrical components of wireless earphone 230. In some embodiments, battery 236 can be a rechargeable battery that enables the battery to be repeatedly charged as needed to replenish its stored energy. For instance, rechargeable battery 236 can be coupled to battery charging circuitry 237 that is operatively coupled to receive power from case interface 238. Case interface 238 can include electrical contacts 142, 144, which enable charge-through carrying case 250 to transfer power to wireless earphone 230 when the earphone is stored within the charge-through carrying case via a wired or wireless connection 264 as discussed herein.

Charge-through carrying case 250 can include an earbud bud interface 252, a power receiving component 254, power transfer circuitry 256 and state detection components 258. Earbud interface 252 can include first and second pairs of electrical contacts, one pair for each wireless earphone 230 that can be stored within case 250, that can be mated with (electrically coupled to) corresponding contacts that are part of case interface 238 of each earbud (e.g., contacts 142, 144) when an earbud is stored within charge-through carrying case 250.

Power receiving component 254 can be a receptacle connector (e.g., a USB-C or a lightning connector) that enables an external energy source to be directly connected to the charge-through carrying case or connected to the charge-through carrying case via an appropriate power adapter. Thus, when earphones 230 are stored within charge-through carrying case 250 and the charge-through carrying case is connected to receive electrical power (e.g., via a cable and/or power adapter coupled between a power source and power receiving component 254), power transfer circuitry 256 within case 250 can transfer power to the wireless earphones 230 via earbud interface 252. The transferred power can be received by each earbud via its case interface 238 in order to charge its earphone battery 236.

While the various examples discussed herein for receiving power at charge-through carrying case 250 and providing power to the wireless earphones 230 rely on physical, electrical connections, embodiments are not limited to such. Other embodiments can receive and/or transfer power wirelessly instead of, or in addition to such physical connections, using inductive or similar techniques. For example, in some embodiments power receiving component 254 can wirelessly receive power from an inductive power source and/or power can be wirelessly transmitted from earbud interface 252 and wirelessly received by case interface 238.

Notably, and as discussed above, charge-through carrying case 250 does not include a battery. Thus, case 250 cannot store and discharge energy to power circuitry internal to the charge-through carrying case and cannot recharge the battery 236 of either wireless earphone 230 unless the charge-through carrying case is connected to a power source via power receiving component 254.

Furthermore, without a battery to provide a persistent source of power to circuitry within case 250, the charge-through carrying case also does not include a microcontroller or other internal processor that requires persistent power to operate. Without an internal processor and persistent source of power, case 250 cannot rely on a processor and techniques used by other, previously known charging cases, to detect different states of the case. Instead, charge-through carrying case 250 includes various state detection components 258 that operate off power received from one or both of the earbud batteries 236 to enable state detection information to be conveyed to the wireless earphones thus enabling rich interactions between the case and the wireless earphones. In doing such, state detection components 258 cooperate with state detection circuitry 239 within the earbuds as described in detail below.

### User Experience

As noted above, many previously known earphone and charging case products are able to provide a rich user experience by detecting and conveying different states between the charging case and wireless earphones by some combination of detection mechanisms that rely on an internal microcontroller or similar processor within the charging case. Such products typically rely on serial communication between the charging case and wireless earphones where the left and right earphones communicate with the charging case over different, unique serial communication buses. That is, the left earphone will use a first serial communication bus when "talking" with the charging case while the right earphone uses a second serial communication bus different than the first bus. Thus, as an example, when the lid of such a traditional charging case is opened, the charging case can send separate messages to each earphone over the respective buses to indicate that the lid is opened, and the earphones can take action accordingly.

Many previously known wireless earphone and charging case products also rely on an internal microcontroller or similar processor within the charging case to detect whether an earphone is stored in the case in the first place. For example, this earbud detection is often performed by detecting the capacitance of an earphone stored in the case, a process that is managed by the microcontroller within the charging case.

In embodiments disclosed herein, serial communications from the charge-through carrying case to the earphones are not possible due to the lack of a microcontroller or similar processor in the charge-through carrying case to transmit or receive such communications. Similarly, the lack of a microcontroller prevents the charge-through carrying case disclosed herein from using the same capacitance check/earphone detection process that is managed by a microcontroller within typical charging cases.

### State Detection according to Embodiments

Despite the lack of a battery and microcontroller, when wireless earphones 130 are stored in charge-through carrying case 150, the charge-through carrying case and stored earphones can cooperate to implement state detection features. For example, in various embodiments a wireless earphone 130 can detect one or more of the following states: whether the earphone is in or out of the charge-through carrying case, whether an external power source is connected to the charge-through carrying case to allow the earphone to charge its battery, whether the case lid is open or closed, and/or whether one or both earphones are stored in the charge-through carrying case.

Once such state information is determined and conveyed to wireless earphone 130, the earphone can then make "decisions" based on the state detected to improve a user's experience with the earphones. For example, the rechargeable battery within a wireless earphone is typically rather small due limits on the size of the earphone itself. When a user is done using a wireless earphone and places the earphone in charge-through carrying case and closes its lid according to some embodiments, the earphone can turn off its wireless circuitry to conserve battery power. As another example, if an earphone is stored in the charge-through carrying case and detects that the lid was opened, the earbud can enable its wireless circuitry (e.g., Bluetooth) so that the earphone can be paired with a host device.

Various states that can be detected by charge-through carrying case and earphones disclosed herein, and how such states can be detected, are discussed below with respect to FIG. 3, which is a simplified schematic diagram of a portable wireless listening system 300 that includes a pair of wireless earphones 310a, 310b and a charge-through carrying case 350 in which the earphones 310a, 310b can be stored. Circuitry within earphone 310a is substantially identical to the circuitry within earphone 310b. Thus, for the sake of brevity and convenience, the description below often refers generally to each or to an "earphone 310" which is understood to mean either earphone 310a or earphone 310b or refers to "earphones 310" plural which is understood to mean the pair of earphones 310a, 310b. Charge-through carrying case 350 can be representative of either charge-through carrying case 150 or 250, and each earphone 310 can be representative of earphones 130 or 230.

Information and power can be exchanged between charge-through carrying case 350 and earphones 310 over a common charge and communications bus 340 (sometimes referred to herein as "charge/comms bus 340" or just "bus 340"). Charge through carrying case 350 can include a first bus interface 342 and each wireless earphone 310 can include a second bus interface 344. The first and second bus interfaces 342, 344 can be implementations of earbud interface 252 and case interface 238, respectively.

When the wireless earphones 310 are stored within charge-through carrying case 350, first bus interface 342 and the second bus interface 344 are operably coupled to each other. In the embodiment depicted in FIG. 3, first bus interface 342 includes first and second pairs of electrical contacts 362, 364 and each second bus interface 344 includes a single pair of electrical contacts 322 that mates with one of the contact pairs 362, 364. One contact in each of the contact pairs 322, 362, 364 is connected to the bus 340 while the other contact in each of the contact pairs 322, 362, 364 is connected to ground.

The circuitry shown in FIG. 3 represents a subset of the overall circuitry within each component of portable wireless listening system 300. For example, the circuitry shown in FIG. 3 within earphones 310 can represent an implementation of at least portions of state detection circuitry 239, case interface 238 and battery charging circuitry 237 but does not include circuitry for some other components, such as communication system 233 or sensor system 234. The circuitry depicted in FIG. 3 within charge-through carrying case 350 can represent an implementation of at least portions of, but not necessarily all of, state detection components 258, power transfer circuitry 256, power receiving interface 254 and earbud interface 252.

### 1. Lid State Indication with External Power Source Present

As mentioned above, when one or more wireless earphones are stored in a charge-through carrying case (e.g., case 350), some embodiments are able to determine whether the lid of a charge-through carrying case (e.g., lid 152) is open or closed. The manner in which the state of the lid is detected will depends on whether the charge-through carrying case is coupled to an external power source or not.

Charge-through carrying case 350 can include a receptacle connector 352 (e.g., a USB-C or a Lightning connector) that can receive a corresponding plug connector that couples the charge-through carrying case to an external power source. Connector 352 includes at least one ground pin (GND) and one power pin (V_{CHG}). A buck-boost regulator 354 can be coupled to receive an input voltage from power pin V_{CHG} when an external power source is present.

While buck-boost regulator 354 can ensure that wireless earphones 310 receive a consistent charge voltage within the recommended range for the earphones, the buck-boost regulator can also be configured to provide a different output voltage based on whether the lid for charge-through carrying case 350 is open or closed as described below. In some embodiments, the output voltage of buck-boost regulator 354 is adjustable by a voltage selection input.

In the embodiment depicted in FIG. 3, the output voltage of the buck/boost regulator can be set by a resistive divider (not shown). The "top" resistor in such embodiments in the divider can be located between the output voltage node and the feedback node of the regulator. The "bottom" resistor in the divider can be located between the feedback node and ground. When the lid of case 350 is closed, a single resistor is connected in the "bottom" position of the divider and the output of buck-boost regulator 354 is set to a first value range (referred to herein as "V_{Charge Present Lid Closed}").

The lid of charge-through carrying case 350 interacts with the circuitry within the charge-through carrying case via a detector switch 370. When the lid is closed, detector switch 370 is not engaged and switch 370 is an open circuit. When the lid is open, detector switch 370 is engaged and the switch appears as a short circuit.

In the presence of an external power source coupled to connector 352, when the lid is open and detector switch 370 is engaged, it results in a second resistor being connected in parallel in the "bottom" position of the resistive divider which sets the output voltage of buck-boost regulator 354 to a second voltage range (referred to herein as "V_{Charge Present Lid Open}").

Control circuitry 320 within each wireless earphone 310 can monitor the voltage on bus 340. For example, in some embodiments the control circuitry 320 can include a microcontroller with an analog-to-digital converter (ADC) and bus 340 can be connected to the microcontroller on its ADC input pin. When the control circuitry detects that the voltage on bus 340 is within the range V_{Charge Present Lid Open}, the controller can determine that the lid has been opened by a user and take an appropriate action such as turning ON the wireless circuitry of each earphone 310. When the control circuitry detects that the voltage on bus 340 is within the range V_{Charge Present Lid Closed}, the controller can determine that the lid is closed and take a different action, such as turning OFF the wireless circuitry of each earphone 310 to conserve battery power.

The values of the resistors in the resistive divider of buck-boost regulator 352 are selected such that: V_{Charge Present Lid Closed} < V_{Charge Present Lid Open}. Additionally, because these voltages will be read by an analog-to-digital converter (ADC) within wireless earphones 310, several additional factors should be taken into account when selecting the resistors that set these voltages. Specifically, even at maximum charging/operating current, and accounting for worst-case ADC error, the range of voltages read by the ADC within each earphone 310 and interpreted as V_{Charge Present Lid Open} should not overlap with the range of voltages read by the ADC within each earphone 310 and interpreted as V_{Charge Present Lid Closed}. Also, both voltage ranges V_{Charge Present Lid Closed} and V_{Charge Present Lid Open} should be entirely within the range of voltages that enable the battery within each wireless earphone 310 to be recharged when the earphones are stored within charge-through carrying case 350.

### 2. Lid State Indication with External Power Source Absent

Charge-through carrying case 350 includes a depletion mode switch 374 that enables lid detector switch 370 to convey whether the lid of case 350 is open or closed when an external power source is not present on connector 352. As shown in FIG. 3, one node of depletion mode switch 374 is coupled to a node of lid detector switch 370. A voltage monitor IC 372 indicates to the depletion mode switch 374 whether an external power source is connected to receptacle connector 352 or not.

When an external power source is present, depletion mode switch 374 operates in the "off" region and does not provide any additional connection to lid detector switch 370. When no external power source is present, however, depletion mode switch 374 operates in the "on" region and connects one node of the lid detector switch to a resistor 376, indicated in FIG. 3 as "R_{easelidpd}". Thus, when the case lid is closed, detector switch 370 is not engaged and is an open circuit resulting in no additional connections made to the common charge/communications bus 340. When the case lid is open, detector switch 370 is engaged and the switch appears as a short circuit, which results in resistor 376 (R_{caselidpd}) being connected between the common charge/comms bus 340 and ground.

In the absence of external power received over receptacle connector 352, wireless earphones 310 stored in case 350 can detect the state of the case lid by applying a known pull-up voltage to the common charge/communications bus 340 through an active constant current source 312 and then taking an ADC reading (e.g., at the ADC pin of a microcontroller in control circuitry 320). In some embodiments, the active constant current source can include an enable input that is coupled to a general purpose I/O (GPIO) pin of a microcontroller within control circuitry 320 allowing the microcontroller to control operation of the constant current source 312. If the case lid is closed, no pull-down resistor 376 will be present. Because very little current is drawn from the active pull-up 312, it will act as a constant current source and maintain a regulated output voltage and the ADC voltage reading will be roughly equal to the known nominal pull-up voltage (referred to herein as "V_{Charge Absent Lid Closed}").

If the lid of case 350 is open, pull-down resistor 376 (R_{caselidpd}) will be present. The value of resistor 376 can be chosen to be low enough so that when the nominal/regulated output voltage of the active pull-up is present, the pull-down resistor 376 will draw a current in excess of the constant current limit of the active pull-up IC. The active pull-up IC 312 will then drop its output voltage in order to maintain a constant current through the pull-down resistor. The ADC voltage reading in this stage will be roughly equal to (e.g., within predetermined percentage of) the constant current multiplied by the value of resistor 376 (R_{caselidpd}). This voltage can be referred to herein as V_{Charge Absent Lid Open}").

Due to the behavior of active pull-up constant current source 312, V_{Charge Absent Lid Open} < V _{Charge Absent Lid Closed}. Because these voltages will be read by an ADC within an earphone 310 stored in charge-through carrying case 350, several additional factors should be taken into account when selecting the pull-down resistor value and active pull-up parameters so that V_{charge Absent Lid Open} does not overlap with V_{Charge Absent Lid Closed}. Specifically, there should be an adequate "gap" between the voltage ranges for V_{Charge Absent Lid Open} and V_{Charge Absent Lid Closed} to account for ADC error. Also, if multiple earphones 310 are to be stored in charge-through carrying case 350, each may contribute its own active pull-up constant current source 312. The constant current and the lid pull-down resistor should be selected such that they will result in a detectable difference in the voltage on charge/communications bus 340 when the case lid is open, whether the active pull-up 312 is enabled on one wireless earphone 310 stored in case 350 or on both wireless earphones 310 stored in case 350.

### 3. Dock/Undock Detection

Embodiments disclosed herein also enable wireless earphones 310 to have a means of determining whether they are "docked" (stored in case 350) or "undocked" (removed from or not stored within case 350). When an external power source is received over receptacle connector 352, earphone 310 can determine it is docked simply by detecting (e.g., via voltage detector 314) either of the voltages V_{Charge Present Lid Closed} or V_{Charge Present Lid Open}. If earphone 310 does not detect a voltage within either of these ranges, the earphone can collect additional information to determine whether it is docked or undocked.

When an external power source is not received over receptacle connector 352, a capacitance check can be used to determine whether an earphone 310 is docked within the charge-through carrying case or undocked. For the purpose of dock/undock detection, portable wireless listening system 300 can include a known capacitance value in both charge-through carrying case 350 (C_{case}) and each earphone 310 (C_{acc}).

As described above, some previously known charging cases detect whether or not an earphone is docked by generating a pulse on the charging/communications bus and examining the rise and fall times of the pulse to detect whether an earphone is present. For example, when an earphone is docked, there can be a significant increase in capacitance on the bus resulting in measurably slower rise and fall times. In such charging cases, the case itself is responsible for detecting the docked or undocked state of the earphone and capacitance values are generally chosen such that C_{acc} is much greater than C_{case}.

In contrast, in portable wireless system 300, each earphone 310a, 310b is responsible for detecting its own docked or undocked state and capacitance values are chosen such that C_{case} is much greater than C_{acc}. To detect C_{case}, the accessory generates a pulse on charge/comms bus 340 using a general purpose I/O line from control circuitry 320 to control active pull-up 314 with enable. In the depicted embodiment, control circuitry 320 can be part of a system-on-chip (SOC) that integrates multiple components together, including a microcontroller and a power management IC, to control operation of earphone 310. In other embodiments, control circuitry can be implemented with other processing circuitry and components and can be determined by a person of skill in the art based on the present disclosure.

Earphone 310 can then determine the rise and fall time of the generated pulse by monitoring the output of voltage detector 314 which is connected to bus 340. If the rise/fall times are above a certain range, earphone 310 recognizes that it is docked within case 350. If the rise/fall times are below a certain range, earphone 310 recognizes it not docked within case 350. Once the docked/undocked state is determined by earphone 310, it can take one or more actions to provide an improved user experience.

The rise/fall time of charge/comms bus 340 during this pulsing process is determined not only by C_{acc} and C_{case}, but also by any series resistance between active pull-up 312 and bus 340 as well as by any shunt resistance from the bus 340 to ground. In some embodiments it is desirable to keep these detection pulses as short as possible to allow for faster detection of the dock/undock state. This enables an accurate detection of the dock/undock state even when an end user rapidly removes one or both of earphones 310 from charge-through carrying case 350. Additionally, it can be desirable to keep the detection pulses as short as possible in order to minimize the likelihood of a collision between two docked earphones running capacitance detection asynchronously. In order to reduce the required capacitance detection pulse duration, charge-through carrying case 350 can include pull-down resistor 316 (R_{accpd}) on charge/comms bus 340 which can be enabled via a NMOS transistor controlled by a general purpose I/O pin of control circuitry 320. Pull-down resistor 316 can be enabled shortly before the discharge portion of the detection pulse.

### Battery Disconnect (Ship Mode)

Portable wireless listening system 300 can also implement an operational state for earbuds 310a, 310b in which battery current consumption is kept to an absolute minimum for the purpose of maximizing battery life while the earphones are not in use. This state is referred to herein as the "battery disconnect" state, which is very useful when portable wireless system 300 is initially packaged prior to being sold and delivered to a customer. Earphone 310a, 310b can be put into the battery disconnect state between being packed out at a manufacturing facility and being received and unboxed by an end customer. Thus, battery disconnect state is sometimes referred to as the "ship mode". In essence, ship mode can help ensure an acceptable battery life when a customer first unboxes and powers-on a new set of earphones 310.

Earphones 310 can also be put into the battery disconnect state when stored in charge-through carrying case 350 for prolonged period. In this manner, the battery disconnect state can also prevent the battery from being too deeply discharged between uses, which could otherwise result in some permanent loss of battery energy storage capacity.

Conventional charging cases typically rely on the constant presence of power for interactions with wireless earphones stored in such cases. Since such charging cases contain an internal battery, the cases can function with power even in the absence of an external power source, provided that the battery is not fully discharged. The constant presence of power enables previously known charging cases to enter and exit from the battery discharge state based on some action on the charging case (for example, opening of lid) that is detected by the charging case.

Without an internal battery, charge-through carrying case 350 cannot operate in such a manner. Instead, embodiments disclosed herein can manage the power state of earphones 310 with circuitry within wireless earphones 310 and powered by the batteries within each of the wireless earphones.

As shown in FIG. 3, each earphone 310 includes a battery disconnect circuit 330 located between a battery module 324 of the earphone (i.e., the battery cell and protection circuit module) and the rest of the earphone system. The battery disconnect circuit 330 in each earphone 310 enables a wake-up mechanism from the battery discharge state that does not require presence of battery power in charge-through carrying case 350. In some embodiments, the wake-up mechanism can be the opening of the lid of charge-through carrying case 350. Additionally, when the pair of earphones 310 are stored in charge-through carrying case 350, the battery disconnect circuit 330 in each individual earphone 310 enables that earphone to detect when the other earphone of the pair is in a battery discharge state via bus 340 thus allowing for synchronization of entry to the battery discharge state or for one earphone 310 to deliberately wake the other earphone 310 from its battery discharge state.

In some embodiments, battery disconnect circuit 330 has four key connections to the system (in addition to a ground connection), including: (1) a load switch "input" from battery pack 324 (_{VBattery Pack}), (2) a load switch output connected to control circuitry 320 (V_{Battery System}), (3) an active high "set" input driven by a general purpose I/O pin from control circuitry 320 which is used to trigger entry to the battery disconnect power state, and (4) an active low "clear" input, driven by a pull-down on charge/comms bus 340 that triggers exit from the battery disconnect power state.

The battery disconnect circuit can be thought of as latching load switch in parallel with a diode. The diode is forward biased during battery charge (current flowing into battery pack 324) and reverse biased during battery discharge. As a latch, as long as the inputs to the circuit are set to their active state for at least some minimum time period, the circuit will maintain its previous state even if the input signals return to the inactive state.

In the embodiment depicted in FIG. 3, a common set of two contacts 322 in each earphone 310 are used for both charging battery 324 and providing state detection information sensed by the various circuit components described above to control circuitry 320. Each earphone 310 includes a one wire powerline comms controller 334 in order to facilitate such a dual purpose for common charge/communications bus 340.

### 1. Entry to Battery Disconnect

In order to guarantee that battery disconnect circuit 330 does not automatically wake back up to active mode, prior to assertion of the "set" input, embodiments ensure that charge/comms bus 340 has a DC bias high enough to overcome the V_{Input Low} (VIL) threshold of the active low "clear" input. In some embodiments, the constant current source 312 (Active Pull-up with Enable circuit 312) can be used to provide this DC bias.

Additionally, some embodiments quiesce any flash operations on control circuitry 320 prior to entry to battery disconnect mode in order to prevent memory corruption. After all preconditions are met, entry to battery disconnect mode can be triggered by assertion of a general input/output line from control circuitry 320 to the active high "set" input of battery disconnect circuit 330.

When "set" is asserted, it results in: (1) the load switch portion of battery disconnect circuit 330 getting disabled, disconnecting V_{BAT_PACK} from V_{BAT_SYS} in the "discharge" direction; and (2) an LDO within the battery disconnect circuit getting enabled, providing a weak DC pull-up to charge/comms bus 340. The weak pull-up is helpful for both detection of an earphone 310 in battery disconnect mode (the earphone will present a known voltage if it successfully enters battery disconnect) and supporting functionality of the active low "clear" input used to exit battery disconnect.

### 2. Exit from Battery Disconnect

Each earphone 310, when stored in charge-through carrying case 350, can exit battery disconnect in one of two ways depending on whether charge-through carrying case 350 is connected to an external power source. When charge-through carrying case 350 is connected to a power source via receptacle connector 352, case 350 will present a valid charging voltage to each earphone 310. When this charge voltage is presented to an earphone 310, the internal charger within control circuitry 320 will provide a path from the charge node to the V_{BAT_SYS} node. Because the diode within the battery disconnect circuit is forward biased from V_{BAT_SYS} to V_{BAT_PACK}, it will allow charge current to conduct to battery pack 324 for just as much time is required the "latch" portion of battery disconnect circuit 330 to clear and re-enable the "load switch" portion of the circuit, re-connecting V_{BAT_PACK} to V_{BAT_SYS}.

When no power adapter is connected to charge-through carrying case 350 and the lid is opened, the case will connect pull-down resistor 376 to charge/comms bus 340. Resistor 376 is chosen such that the pull-down is strong enough to bring the voltage on charge/comms bus 340 below the VIL threshold of the active low "clear" input. This, in turn, causes the "latch" portion of the battery disconnect circuit to clear and re-enable the "load switch," re-connecting V_{BAT_PACK} to V_{BAT_SYS}.

### Earphone State Diagram

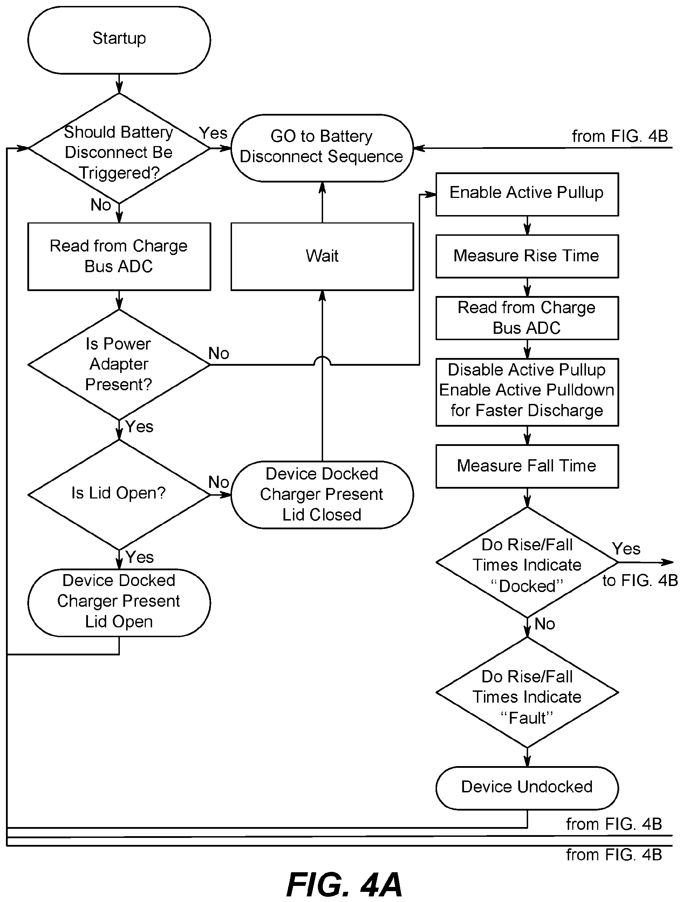

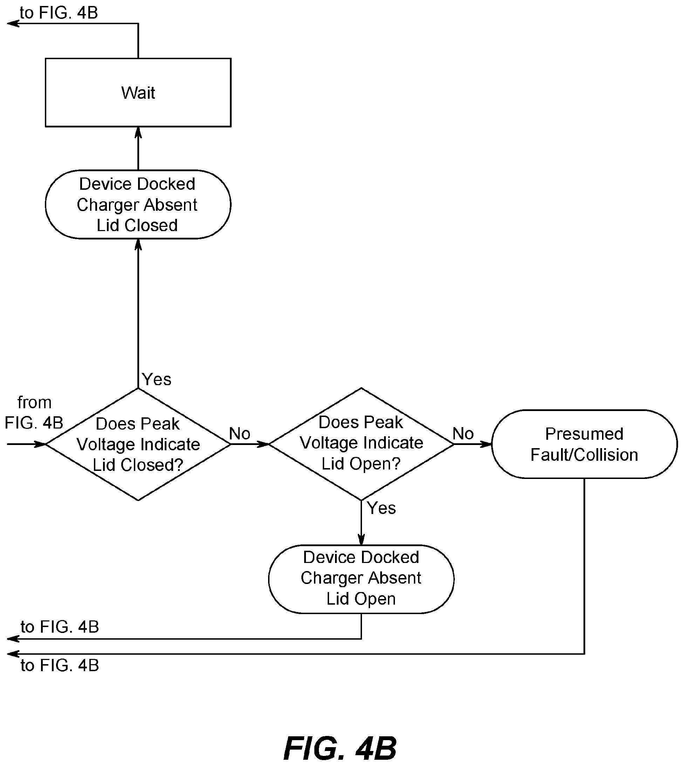

Since earphones 310 are the only components within portable wireless listening system 300 that includes batteries and thus can have persistent power, the earphones 310 control operation of system 300. FIGS. 4A and 4B present a simplified state diagram illustrating the decisions the circuitry described above within each earphone 310a, 310b makes to detect and/or set different states of operation for the earphones and provide the rich user experience for a user of the earphones.

Exemplary portable electronics systems and portable wireless listening device systems are set out in the following items.
1. A portable electronic system comprising:
   a case for storing a battery powered accessory, the case comprising a body defining a receiving area in which the battery powered accessory can be stored, a lid coupled to the body and
   operable between a closed position in which the lid covers the receiving area and an open position in which the receiving area is exposed, and a power receiving component operable to be coupled to an external power source to receive power;
   a battery powered accessory comprising a housing, a rechargeable battery disposed within the housing, and control circuitry disposed within the housing and coupled to the rechargeable battery; and
   a common bus operable to, when the battery powered accessory is stored within the receiving area of the case, transfer power and enable communication between the case and the battery powered accessory;
   wherein the control circuitry within the battery powered accessory is configured to determine a state of the portable electronic system by monitoring voltage on the common bus.
2. The portable electronic system set forth in item 1, wherein the state of the portable electronic system determined by the control circuitry in the battery powered accessory is whether the lid of the case is opened or closed, and the control circuitry determines whether the lid is opened or closed:
   based on a voltage level on the common bus when the power receiving component of the case is connected to an external power supply, and
   by detecting a presence or absence of a pull-down resistor on the common bus when the power receiving component of the case is not connected to an external power supply.
3. The portable electronic system set forth in item 1 or 2 wherein:
   the state of the portable electronic system determined by the control circuitry in the battery powered accessory is whether the lid of the case is opened or closed;
   the case further comprises a switch operably coupled to the lid and configured to alter a voltage on the common bus to a first voltage when the lid is in the open position and to a second voltage when the lid is in the closed position; and
   the control circuitry in the battery powered accessory is configured to determine whether the case lid is open or closed based on the voltage on the common bus.
4. The portable electronic system set forth in item 3 wherein the case further comprises a voltage regulator and wherein, when the power receiving component in the case is coupled to and receiving power from an external power source:
   the voltage regulator is configured to supply a charging voltage to the common bus between a minimum acceptable voltage level and a maximum acceptable voltage level;
   the control circuitry in the battery powered accessory is configured to charge the rechargeable battery from the charging voltage; and
   the first voltage is within a first charging voltage range that is entirely within the range of the minimum acceptable voltage level and a maximum acceptable voltage level;
   the second voltage is within a second charging voltage that is entirely within the range of the minimum acceptable voltage level and a maximum acceptable voltage level; and
   the first voltage charging range and second voltage charging range do not overlap.
5. The portable electronic system set forth in item 3 or 4 wherein:
   the battery powered accessory further comprises a constant current source operably coupled to the control circuitry in the battery powered accessory; and
   when the power receiving component is not receiving power from an external power source, the control circuitry: (i) activates the constant current source to apply a known pull-up voltage on the common bus, (ii) then takes a voltage reading of the voltage on the common bus, and (iii) determines that the lid is opened or closed based on whether the voltage reading is approximately equal to the pull-up voltage or less than the pull-up voltage.
6. The portable electronic system set forth in any of items 1-5 wherein the case for storing a battery powered accessory further comprises a first bus interface; the battery powered accessor further comprises a second bus interface; and, when the battery powered accessory is stored within the receiving area of the case, the first bus interface is coupled to the second bus interface.
7. The portable electronic system set forth in item 6 wherein each of the first and second bus interfaces comprise a set of two electrical contacts.
8. The portable electronic system set forth in any of items 1-7 wherein the case does not include a rechargeable battery.
9. The portable electronic system set forth in any of items 1-8 wherein the power receiving component comprises a receptacle connector.
10. The portable electronic system set forth in any of items 1-9 wherein the case includes first and second receiving areas, and the portable electronic system comprises first and second battery powered accessories, the first battery powered accessory sized and shaped to fit within the first receiving area and the second battery powered accessory sized and shaped to fit with in the second receiving area.
11. The portable electronic system set forth in item 10 wherein the first battery powered accessory is a first wireless earphone, and the second battery powered accessory is a second wireless earphone.
12. A portable wireless listening device system comprising:
   a pair of wireless earphones including a first wireless earphone and a second wireless earphone,
   each of the first and second wireless earphones comprising: an earphone housing, an acoustic port formed through the earphone housing, a speaker disposed within the earphone housing and
   aligned to emit sound through the acoustic port, a rechargeable battery disposed within the earphone housing, and control circuitry disposed within the earphone housing;
   a case for storing the pair of wireless earphones, the case comprising: a body defining first and second sockets, the first socket sized and shaped to receive the first wireless earphone and the second socket sized and shaped to receive the second wireless earphone; a lid coupled to the body and operable between a closed position in which the lid covers the first and second sockets
   and an open position in which the first and second sockets are exposed; and a power receiving component configured to be coupled to an external power source to receive power; and
   a common bus operable to, when the wireless earphones are stored within the case, transfer power and enable communication between the case and the wireless earphones; and
   wherein the control circuitry within each wireless earphone is configured to determine a state of portable wireless listening system by monitoring voltage levels on the common bus.
13. The portable wireless listening device system of item 12 wherein the system includes only two rechargeable batteries with the rechargeable battery in the first wireless earphone being a first of the two rechargeable batteries and the rechargeable battery in the second wireless earphone being a second of the two rechargeable batteries.
14. The portable wireless listening device system of item 12 or 13 wherein the state of the portable wireless listening system determined by the control circuitry in the wireless earphone is whether the lid of the case is opened or closed.
15. The portable wireless listening device system of any of items 12-14 wherein the state of the portable wireless listening system determined by the control circuitry in the wireless earphone is whether the first or second wireless earphone stored within the case.
16. The portable wireless listening device system set forth in item 15 wherein:
   the case further comprises a switch operably coupled to the lid and configured to alter a voltage on the common bus to a first voltage when the lid is in the open position and to a second voltage when the lid is in the closed position; and
   the control circuitry in each wireless earphone is configured to determine whether the case lid is open or closed based on the voltage on the common bus.
17. The portable wireless listening device system set forth in item 16 wherein the case further comprises a voltage regulator and wherein, when the power receiving component in the case is coupled to and receiving power from an external power source:
   the voltage regulator is configured to supply a charging voltage to the common bus between a minimum acceptable voltage level and a maximum acceptable voltage level;
   the control circuitry in each wireless earphone is configured to charge its respective wireless earphone from the charging voltage; and
   the first voltage is within a first charging voltage range that is entirely within the range of the minimum acceptable voltage level and a maximum acceptable voltage level, the second voltage is within a second charging voltage that is entirely within the range of the minimum acceptable voltage level and a maximum acceptable voltage level, and the first voltage charging range and second voltage charging range do not overlap.
18. The portable wireless listening device system set forth in any of items 15-17 wherein:
   the case for storing the pair of wireless earphones further includes a first bus interface to the common bus, the first bus interface comprising first set of two electrical contacts in the first socket and a second set of electrical contacts in the second socket;
   the pair of wireless earphones comprises a second bus interface to the common bus, the second bus interface comprising a third set of electrical contacts aligned to mate with the first set of electrical contacts when the first wireless earphone is received in the first socket, and a fourth set of electrical contacts aligned to mate with the second set of electrical contacts when the second wireless earphone is received in the second socket; and
   when the pair of wireless earphones is stored within the case, the first bus interface is coupled to the second bus interface.
19. The portable wireless listening device system set forth in any of items 12-18 wherein the power receiving component comprises a receptacle connector.
20. The portable wireless listening device system set forth in any of items 12-19 wherein:
   each wireless earphone further comprises a constant current source operably coupled to the control circuitry in its respective wireless earphone; and
   when the power receiving component is not receiving power from an external power source, the control circuitry: (i) activates the constant current source to apply a known pull-up voltage on the common bus, (ii) then takes a voltage reading of the voltage on the common bus, and (iii) determines that the lid is opened or closed based on whether the voltage reading is approximately equal to the pull-up voltage or less than the pull-up voltage.

### Additional Embodiments

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not intended to be exhaustive or to limit the embodiments to the precise forms disclosed. For example, while various embodiments described above were specific to cases for wireless earphones, it is to be understood that embodiments are not limited to such. In other embodiments, cases disclosed herein can be used to store other types of battery powered accessory devices, such as over-ear and on-ear headphones, smart watches and smart rings, and the like. As another example, while FIGS. 1 and 2 depicted and described specific examples of wireless earphones according to some embodiments, embodiments are not limited to the described examples. A person of skill in the art will appreciate that in other embodiments, earphones can have a different physical shape than that depicted herein and can include fewer or more features and/or components than described herein.

Also, while different embodiments of the invention were disclosed above, the specific details of particular embodiments may be combined in any suitable manner without departing from the spirit and scope of embodiments of the invention. Further, it will be apparent to one of ordinary skill in the art that many modifications and variations are possible in view of the above teachings.

Finally, it is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. A portable electronic system comprising:
a case for storing a battery powered accessory, the case comprising a body defining a receiving area in which the battery powered accessory can be stored, a lid coupled to the body and operable between a closed position in which the lid covers the receiving area and an open position in which the receiving area is exposed, and a power receiving component operable to be coupled to an external power source to receive power;
a battery powered accessory comprising a housing, a rechargeable battery disposed within the housing, and control circuitry disposed within the housing and coupled to the rechargeable battery; and
a common bus operable to, when the battery powered accessory is stored within the receiving area of the case, transfer power and enable communication between the case and the battery powered accessory;
wherein the control circuitry within the battery powered accessory is configured to determine a state of the portable electronic system by monitoring voltage on the common bus.

2. The portable electronic system set forth in claim 1, wherein the state of the portable electronic system determined by the control circuitry in the battery powered accessory is whether the lid of the case is opened or closed, and the control circuitry determines whether the lid is opened or closed:
based on a voltage level on the common bus when the power receiving component of the case is connected to an external power supply, and
by detecting a presence or absence of a pull-down resistor on the common bus when the power receiving component of the case is not connected to an external power supply.

3. The portable electronic system set forth in claim 1 or 2 wherein:
the state of the portable electronic system determined by the control circuitry in the battery powered accessory is whether the lid of the case is opened or closed;
the case further comprises a switch operably coupled to the lid and configured to alter a voltage on the common bus to a first voltage when the lid is in the open position and to a second voltage when the lid is in the closed position; and
the control circuitry in the battery powered accessory is configured to determine whether the case lid is open or closed based on the voltage on the common bus.

4. The portable electronic system set forth in claim 3 wherein the case further comprises a voltage regulator and wherein, when the power receiving component in the case is coupled to and receiving power from an external power source:
the voltage regulator is configured to supply a charging voltage to the common bus between a minimum acceptable voltage level and a maximum acceptable voltage level;
the control circuitry in the battery powered accessory is configured to charge the rechargeable battery from the charging voltage; and
the first voltage is within a first charging voltage range that is entirely within the range of the minimum acceptable voltage level and a maximum acceptable voltage level;
the second voltage is within a second charging voltage that is entirely within the range of the minimum acceptable voltage level and a maximum acceptable voltage level; and
the first voltage charging range and second voltage charging range do not overlap.

5. The portable electronic system set forth in claim 3 or 4 wherein:
the battery powered accessory further comprises a constant current source operably coupled to the control circuitry in the battery powered accessory; and
when the power receiving component is not receiving power from an external power source, the control circuitry: (i) activates the constant current source to apply a known pull-up voltage on the common bus, (ii) then takes a voltage reading of the voltage on the common bus, and (iii) determines that the lid is opened or closed based on whether the voltage reading is approximately equal to the pull-up voltage or less than the pull-up voltage.

6. The portable electronic system set forth in any preceding claim wherein the case for storing a battery powered accessory further comprises a first bus interface; the battery powered accessor further comprises a second bus interface; and, when the battery powered accessory is stored within the receiving area of the case, the first bus interface is coupled to the second bus interface.

7. The portable electronic system set forth in claim 6 wherein each of the first and second bus interfaces comprise a set of two electrical contacts.

8. The portable electronic system set forth in any preceding claim wherein the power receiving component comprises a receptacle connector.

9. The portable electronic system set forth in any preceding claim wherein the case includes first and second receiving areas, and the portable electronic system comprises first and second battery powered accessories, the first battery powered accessory sized and shaped to fit within the first receiving area and the second battery powered accessory sized and shaped to fit with in the second receiving area.

10. The portable electronic system set forth in claim 9 wherein the first battery powered accessory is a first wireless earphone, and the second battery powered accessory is a second wireless earphone.

11. The portable electronic system set forth in any of the above claims wherein the case does not include a rechargeable battery.

12. A portable wireless listening device system comprising:
a pair of wireless earphones including a first wireless earphone and a second wireless earphone, each of the first and second wireless earphones comprising: an earphone housing, an acoustic port formed through the earphone housing, a speaker disposed within the earphone housing and aligned to emit sound through the acoustic port, a rechargeable battery disposed within the earphone housing, and control circuitry disposed within the earphone housing;
a case for storing the pair of wireless earphones, the case comprising: a body defining first and second sockets, the first socket sized and shaped to receive the first wireless earphone and the second socket sized and shaped to receive the second wireless earphone; a lid coupled to the body and operable between a closed position in which the lid covers the first and second sockets and an open position in which the first and second sockets are exposed; and a power receiving component configured to be coupled to an external power source to receive power; and
a common bus operable to, when the wireless earphones are stored within the case, transfer power and enable communication between the case and the wireless earphones; and
wherein the control circuitry within each wireless earphone is configured to monitor voltage levels on the common bus to determine whether the lid of the case is opened or closed and whether the first or second wireless earphone is stored within the case.

13. The portable wireless listening device system set forth in claim 12 wherein the case further comprises a switch operably coupled to the lid and configured to alter a voltage on the common bus to a first voltage when the lid is in the open position and to a second voltage when the lid is in the closed position, and a voltage regulator; and wherein:
the control circuitry in each wireless earphone is configured to determine whether the case lid is open or closed based on the voltage on the common bus; and
when the power receiving component in the case is coupled to and receiving power from an external power source:
the voltage regulator is configured to supply a charging voltage to the common bus between a minimum acceptable voltage level and a maximum acceptable voltage level;
the control circuitry in each wireless earphone is configured to charge its respective wireless earphone from the charging voltage; and
the first voltage is within a first charging voltage range that is entirely within the range of the minimum acceptable voltage level and a maximum acceptable voltage level, the second voltage is within a second charging voltage that is entirely within the range of the minimum acceptable voltage level and a maximum acceptable voltage level, and the first voltage charging range and second voltage charging range do not overlap.

14. The portable wireless listening device system set forth in claim 12 or 13 wherein:
each wireless earphone further comprises a constant current source operably coupled to the control circuitry in its respective wireless earphone; and
when the power receiving component is not receiving power from an external power source, the control circuitry: (i) activates the constant current source to apply a known pull-up voltage on the common bus, (ii) then takes a voltage reading of the voltage on the common bus, and (iii) determines that the lid is opened or closed based on whether the voltage reading is approximately equal to the pull-up voltage or less than the pull-up voltage.

15. The portable wireless listening device system of any of claims 12-14 wherein the system includes only two rechargeable batteries with the rechargeable battery in the first wireless earphone being a first of the two rechargeable batteries and the rechargeable battery in the second wireless earphone being a second of the two rechargeable batteries.
